**Europäisches Patentamt**

**European Patent Office**

**Office européen des brevets**

(19)

(11) Veröffentlichungsnummer: **0 263 409 B1**

(12)

# EUROPÄISCHE PATENTSCHRIFT

(45) Veröffentlichungstag der Patentschrift: **05.08.92**

(51) Int. Cl.⁵: **C03B 9/193**, C03B 9/40

(21) Anmeldenummer: **87114188.3**

(22) Anmeldetag: **29.09.87**

Verbunden mit 87906660.3/0324780
(europäische
Anmeldenummer/Veröffentlichungsnummer)
durch Entscheidung vom 13.02.90.

(54) **Verfahren und Vorrichtung zum Verformen eines Glaspostens.**

(30) Priorität: **30.09.86 DE 3633137**

(43) Veröffentlichungstag der Anmeldung:
**13.04.88 Patentblatt 88/15**

(45) Bekanntmachung des Hinweises auf die
Patenterteilung:
**05.08.92 Patentblatt 92/32**

(84) Benannte Vertragsstaaten:
**AT BE CH DE ES FR GB GR IT LI LU NL SE**

(56) Entgegenhaltungen:
**EP-A- 0 165 012**
**US-A- 3 180 718**

(73) Patentinhaber: **Leweringhaus, Manfred,
Dipl.-Kfm.
Hölteregge 36
W-4322 Sprockhövel(DE)**

(72) Erfinder: **Leweringhaus, Manfred
Hölteregge 36
W-4322 Sprockhövel 1(DE)**
Erfinder: **Benke, Laszlo
Ringstrasse 4
CH-8152 Glattbrugg(CH)**
Erfinder: **Kemp, Ottfried
Feldstrasse 38
W-4322 Sprockhövel 1(DE)**

(74) Vertreter: **Schumacher, Horst, Dr. Dipl.-Phys.
et al
Patentanwälte Dipl.-Phys. Dr. Peter Palgen
Dipl.-Phys. Dr. H. Schumacher Frühlingstrasse 43A (Ecke Holunderweg)
W-4300 Essen 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung und ein Verfahren zum Verformen eines Glaspostens, insbesondere in einem geschlossenen Formensystem, zu einem Hohlglasartikel, und zwar einem Vor- oder Endprodukt, insbesondere mittels nach dem Reihenprinzip arbeitenden Herstellungsmaschinen, wie IS- und RIS- und anderen glasverarbeitenden Maschinen, mittels eines in den Glasposten mit vorgebbarem Geschwindigkeits- und - vorzugsweise - auch mit vorgebbarem Druckverlauf vortreibbaren Pegels, bei dem der Pegel von einer Ladeposition in eine Endpreßstellung verfahren wird.

Maschinen zur Herstellung von Hohlglasartikeln, wie die als Reihenmaschinen arbeitenden, sogenannten IS- und RIS- Maschinen, sind bekannt. In diesen bekannten Maschinen läuft der Produktionsprozeß in verschiedenen, einander nachgeordneten Fertigungsstationen ab. In jeder Fertigungsstation wird der gleiche Produktionsschritt an einem oder an einer Mehrzahl von Glasposten vorgenommen; die Arbeitszyklen an den verschiedenen Glasposten laufen dabei zeitversetzt ab. Zur Herstellung eines Hohlglasartikels werden flüssige Glastropfen in einer metallischen Vorform zu einem Vorprodukt, dem sogenannten Külbel verpreßt oder vorgeblasen. Nach Übergabe dieser Rohlinge in die den Vorformen zugeordneten Fertigformen werden die Külbel in diesen Fertigformen zum Fertigprodukt durch Ausblasen oder Evakuieren verformt.

Der Glastropfen fällt von oben in die seitlich geschlossene Vorform an deren unterer Öffnung das sogenannte Mündungswerkzeug angeschlossen ist. Der Tropfen fällt auf den in Ladeposition befindlichen - sogenannten - Pegel, der in seiner Höhenposition veränderbar ist. Ein Vorformboden verschließt dann den oberen Teil der Vorform. Mittels eines Kolbens einer Kolben/Zylinder-Anordnung ist der Pegel in der Vertikalen auf- und abwärts bewegbar. Nach dem Verschließen der Vorform durch den Vorformboden preßt der Pegel durch eine Aufwärtsbewegung das Glas gegen die formgebende Kontur der Vorform, d. h. auch gegen die Kontur des Mündungswerkzeuges und des Vorformbodens, und gibt dem Glas die gewünschte Außen- und Innenkontur gleichzeitig. Das flüssige Glas ist also während einer kurzen Zeitspanne an seiner gesamten inneren und äußeren Oberfläche von formgebenden Konturen begrenzt und füllt das freie Formenvolumen völlig aus. Wenn die flüssigen Glastropfen in die Vorform fallen, befindet sich der Pegel in seiner Ladeposition, in der er die Mündungsöffnung der Form zu einem gewissen Teil verschließt. Erst zum Verformen des flüssigen Glases stößt der Pegel in das Glas hinein und stellt in der Regel dabei gleichzeitig die Mündung des Hohlglasartikels her.

Bei diesen bekannten Glasverformungs-Vorrichtungen und -Verfahren wurde der Pegel - in der Fachsprache auch Plunger genannt - in der Vergangenheit und - in der Praxis auch heute noch - pneumatisch vor- und zurückgefahren. Dabei kann die Ladeposition als untere Ausgangsposition für den aktuellen Hohlglasartikel mittels Distanzbüchsen oder sogenannten Ladeschrauben nur unzureichend positioniert und nur unter großem Zeitaufwand geändert werden. Nachteilig ist auch die Notwendigkeit, den Pneumatikdruck für jeden einzelnen Pegel empirisch einregeln zu müssen. Dieser Pneumatikdruck muß so bemessen werden, daß die Mündung des Külbels vollständig ausgeformt wird; er kann zwischen etwa 0,4 und 1,5 bar liegen und muß empirisch anhand von Qualitätskontrollen am fertigen Hohlglasartikel für jeden einzelnen Pegel gesondert ermittelt werden. Veränderungen der Eigenschaftswerte des flüssigen Glases können zu Qualitätsänderungen führen, die ein erneutes Verändern des Pneumatikdruckes erforderlich machen. Der Verformungsablauf kann bei diesen bekannten Verfahren und Vorrichtungen aber nicht unabhängig von anderen Einflußgrößen geändert werden. Vielmehr sind der Druck für den Vortrieb des Pegels, die Verformungsgeschwindigkeit sowie der statische Druck, der auf das Glas und das Formensystem ausgeübt wird, in unmittelbarer Abhängigkeit zur Zeitachse nur geringfügig, zum Teil aber gar nicht beeinflußbar.

Aus der EP 0 165 012 A1 sind ein Verfahren und eine Vorrichtung der eingangs genannten Art bekannt. Hier wird der Pegel nach einem vorgegebenen Zeitraster hydraulisch verfahren, wobei in Abhängigkeit von der Zeit der Positions-, der Geschwindigkeits- und der Druckverlauf für den Pegel regelbar ist. Zu diesem Zweck wird der Computer fortlaufend mit Zeitimpulsen von außen versorgt. Ein Hall-Sensor mit einer auf ihrer äußeren Oberfläche schraubenförmig ausgebildeten Kolbenstange wird als Positionssensor und ein Drucksensor wird zum Anzeigen des am Pegel anstehenden Fluiddruckes verwendet. Über einen diesen beiden Sensoren nachgeordneten Computer können Druck- und Fördermenge der den Pegel verstellenden Hydraulikflüssigkeit entsprechend der Relation zwischen Ist- und Sollwerten verändert werden. Diese Vorgehensweise hat den Nachteil, daß die absoluten Positionen des Pegels in den einzelnen Bewegungsphasen für den weiteren Bewegungsablauf des Pegels nicht berücksichtigt werden, so daß Geschwindigkeitsfehler zu nicht vorhersagbaren Endpositionen des Pegels führen. Es wurde erkannt, daß es hierdurch zu Einbußen in der Gleichmäßigkeit der Produktqualität kommen kann. Weiterhin wurde es als nachteilig erkannt, daß bei diesem bekannten Verfahren der Pegel während des gesamten Verformungsschrittes lediglich geschwindigkeitsgeregelt verfahren wird; der Druckverlauf wird zwar während des Verformungsschrittes miterfaßt, doch setzt eine Regelung des Druckverlaufes - und zwar in Abhängigkeit von der Zeit - erst dann ein, wenn die Endpreßstellung des Pegels (dort als Betriebslage bezeichnet) erreicht ist, d. h. wenn der Druck zwischen dem Pegel und dem Glasposten die Bewegung des Pegels gestoppt hat. Als besonders schädlich für die Glasqualität hat es sich erwiesen, wenn der am Pegel anstehende Druck - wie dort vorgeschlagen - nach Erreichen des Pegelstillstandes nochmals erhöht wird. Die von der Zeit abhängige Druckregelung ist aber auch dann von Nachteil, wenn sie auch während des Verformungsschrittes durchgeführt würde. Es hat sich nämlich herausgestellt, daß eine Druckänderung nur unter Berücksichtigung der jeweiligen Pegelposition zu der gewünschten Qualitätsverbesserung bzw. Verbesserung der Gleichmäßigkeit der Qualität des Glasartikels führt, während eine zeitabhängig durchgeführte Druckänderung sehr leicht sogar zu einer Qualitätsverschlechterung, zumindest aber zu einer höheren Ausschußrate führt.

Davon ausgehend liegt der Erfindung die Aufgabe zugrunde, eine Vorrichtung und ein Verfahren zum Verformen eines Glaspostens zu schaffen, die die vorerwähnten Nachteile nicht aufweisen und völlig neuartige Möglichkeiten zum Glasverformen erschließen können; insbesondere soll bei der Verformung eines Glaspostens zum Vor- oder Fertigprodukt den Verformungsablauf in Entsprechung der Qualitätsanforderungen und der aktuellen Größe der die Qualität beeinflussenden Arbeitsparameter der Glasposten selbst sowie der Formen einschließlich ihres Verschleißzustandes derart durchgeführt werden, daß bei geringster Ausschußquote höhere Taktgeschwindigkeiten möglich werden.

Diese Aufgabe wird bei der erfindungsgemäßen Vorrichtung und dem erfindungsgemäßen Verfahren durch die Lehre der Ansprüche 1 und 12 gelöst. Bei einer praktischen Ausführungsform der Erfindung wird ein elektro-hydraulischer Servoantrieb als Antriebsvorrichtung des Pegels, insbesondere mit hydraulischen Spezialzylindern, die als Regel- und Antriebselemente für die vertikale Auf- und Abbewegung des Pegels dienen, verwendet.

Durch die Erfindung wird unter anderem die Produktqualität vergleichmäßigt und verbessert, insbesondere der Ausschuß vermindert und die Einrichtzeit für die einzelnen Pegel spürbar verkürzt. Der Erfindungsgegenstand kann in den verschiedenen gängigen Glasverformungsprozessen eingesetzt werden, wie dem Blas-Blas-Prozeß, den Preß-Blas-Prozeß, dem Preß-Blas-Narrow-Neck- sowie dem Solid-Blank- Prozeß. Der Pegelmechanismus kann in bereits vorhandene Fertigungsstationen ohne weiteres eingebaut werden, d. h. die vorhandenen Maschinen können umgerüstet werden.

Unter einem "elektro-hydraulischen Servoantrieb" wird im Sinne der Erfindung folgendes verstanden: Für das Vor- und Zurückfahren des Pegels wird eine Kolben/Zylinderandordnung benutzt, bei der der Kolben mittels der Hydraulikflüssigkeit vor-und zurückgefahren sowie angehalten werden kann. Dabei wird zur Erzielung eines genau vorgebbaren Vor- und Zurückfahrens des Kolbens ein Ventil verwendet, durch das die beiden Kolbenenden mit vorgebbaren Mengen und Geschwindigkeiten an Hydraulikflüssigkeit versorgt bzw. entsorgt werden. Hierzu wird das Ventil elektrisch betätigt, wobei zwischen der Nullstellung des Ventiles und der maximalen Öffnungsstellung für das Vor- bzw. Zurückfahren des Pegels alle Zwischenstellungen möglich sind. Normalerweise führt das Ventil sehr feine Oszillationsbewegungen aus, um die bestmögliche Regelgenauigkeit zu gewährleisten. Auf diese Weise wird der hydraulisch angetriebene Kolben hochpräzise verfahr- und positionierbar.

Unter einer "elektronischen Positionsregelvorrichtung" wird im Sinne der Erfindung folgendes verstanden: Der von dem Pegel während eines Verformungszyklusses durchfahrene Weg wird in Teilschritte unterteilt, die durch ganz bestimmte, vorzugsweise vorgebbare, Positionen des Pegels bezüglich des Zylinders bestimmt sind (z.B. Ladeposition, Endposition, Rückzugsposition, aber auch Zwischenpositionen, in denen die Vorfahrcharakteristik (Bewegungszustände) des Pegels geändert wird). Diese Positionen werden von dem Pegel über einen geschlossenen Regelkreis angefahren und eingehalten bzw. wieder verlassen. Hierzu wird die Position des Pegels während seines gsamten Bewegungsablaufes laufend durch Messen erfaßt und, vorzugsweise als elektrisches Signal einer Auswerteeinheit, wie einem Mikroprozessor, zugeführt, in dem dann die Ist-Positionen mit den Soll-Positionen verglichen und von dem Befehle an den elektro-hydraulischen Servoantrieb weitergegeben werden.

Gemäß der Erfindung wird der Pegel zumindest von der Ladeposition (des Glaspostens) bis in die Endpreßstellung des Pegels bzw. bis in eine vorgebbare Position vor der Endpreßstellung des Pegels mit vorgebbarer Geschwindigkeit geregelt verfahren. Dieser geschwindigkeitsgeregelte Bewegungsschritt des Pegels ist von der Positionsregelung überlagert, d.h. das zwischen vorgebbaren Positionen des Pegels vorgebbare Geschwindigkeiten regelbar eingehalten werden. Dies ist mit Hilfe der vorerwähnten Ist-Positionsmessung unter Zuhilfenahme eines entsprechend mit Soll-Geschwindigkeitsdaten programmierten Mikroprozessors möglich, der im übrigen auch die Positionsregelung beinhaltet. Durch die Verknüpfung des Geschwindigkeitsregelkreises mit dem geschlossenen Positionsregelkreis ist auch der Geschwindigkeitsregelkreis ein geschlossener Regelkreis.

Gemäß einer bevorzugten Ausführungsform der Erfindung wird der Pegel gegen Ende des zwischen der Ladeposition und der Endpreßstellung durchgeführten Verformungsschrittes druckgeregelt verfahren. Dieser druckgeregelte Arbeitsschritt kann sich entweder nahtlos an den positions- und geschwindigkeitsgeregelten Schritt anschließen - diese Regelungsarten also ersetzen - oder er wird dem kombinierten positions- und geschwindigkeitsgeregelten Schritt ganz oder teilweise überlagert. Die Pegelpositionen, in denen die Druckregelung beginnt und - falls gewünscht - die weitere Position bis zu der die Druckregelung der Geschwindigkeits- und Positionsregelung überlagert ist, ist vorgebbar über den Positionsregelkreis. Jedenfalls sollte bis in die Endpreßstellung hinein positionsgeregelt verfahren werden. Der Druckregelkreis erfordert zumindest einen Drucksensor, der Druck-Istwerte an z.B. den Mikroprozessor weiterleitet, wo sie dann mit Druck-Sollwerten verglichen werden. Dementsprechend veranlaßt der Mikroprozessor die zu diesem Zweck vorgesehenen Ventile für die Hydraulikflüssigkeit für den gewünschten Druck zu sorgen; bevorzugt wird ein kombiniertes Druck-und Mengen-Regelventil hierzu verwendet, welches Bestandteil des oben erwähnten Servoantriebes ist.

Zweckmäßige Ausgestaltungen des Erfindungsgegenstandes, die insbesondere einen vorteilhaften Bewegungsablauf, eine einfache Handhabung des Pegelmechanismus und verbesserte Produktqualität gewährleisten, sind in weiteren Ansprüchen enthalten.

Die erfindungsgemäß zu verwendenden Bauteile bzw. Verfahrensschritte unterliegen in ihrer Größe, Formgestaltung, Materialauswahl und technischen Konzeptionen bzw. ihren Verfahrensbedingungen keinen besonderen Ausnahmebedingungen, so daß die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der zugehörigen Zeichnung, in der eine bevorzugte Ausführungsform einer erfindungsgemäßen Glasverformungsvorrichtung dargestellt worden ist. In der Zeichnung zeigen

Fig. 1    Ein Weg-Zeit-Diagramm der Pegelbewegung während eines Arbeitszyklusses;

Fig. 2    eine Vorform mit Pegelmechanismus im Vertikalschnitt - ausschnittweise - in der Ladeposition des Pegels beim Tropenfall und noch nicht verschlossener Vorform;

Fig. 3    dieselbe Vorform mit Pegelmechanismus mit bereits chargierter und geschlossener Vorform in der Ladeposition des Pegels;

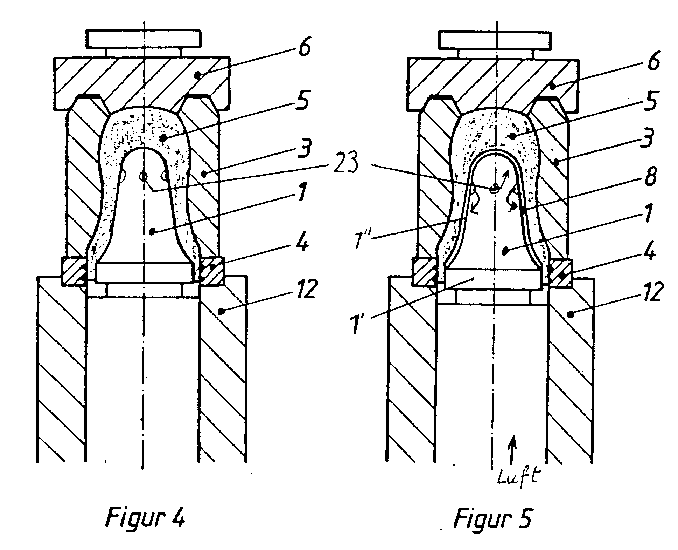

Fig. 4    dieselbe Vorform mit Pegelmechanismus mit ausgeformtem Külbel in der Endpreßstellung des Pegels;

Fig. 5    dieselbe Vorform mit Pegelmechanismus in der Kühlposition des Pegels;

Fig. 6    dieslebe Vorform mit vollständigem Pegelmechnismus in der unteren Endposition des Pegels sowie

Fig. 7    dieselbe Vorform mit vollständigem Pegelmechanismus und Regelungselementen in der Endpreßstellung des Pegels.

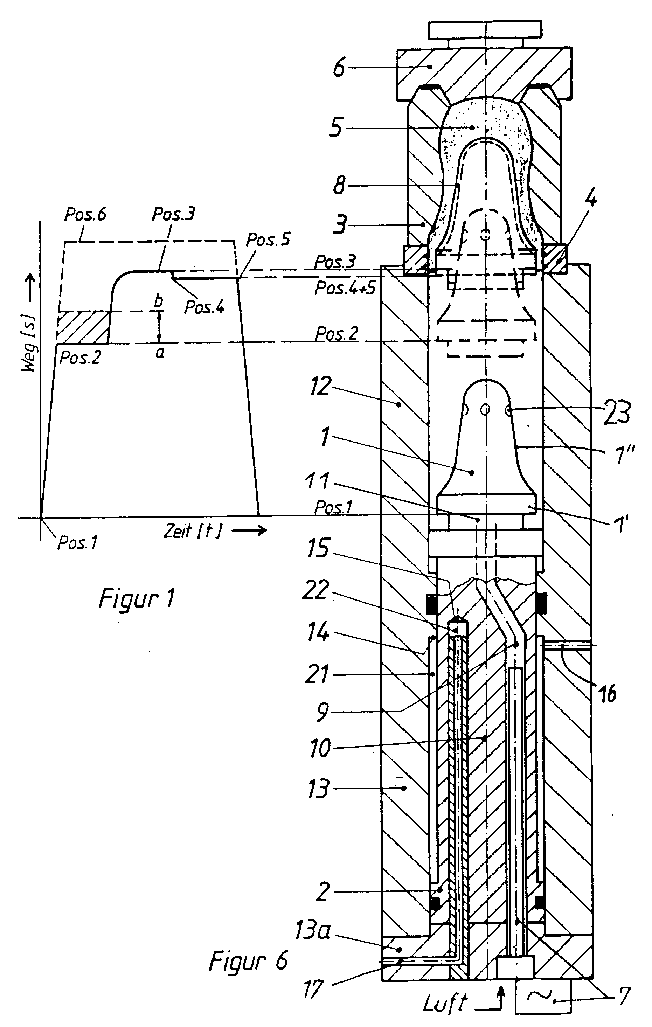

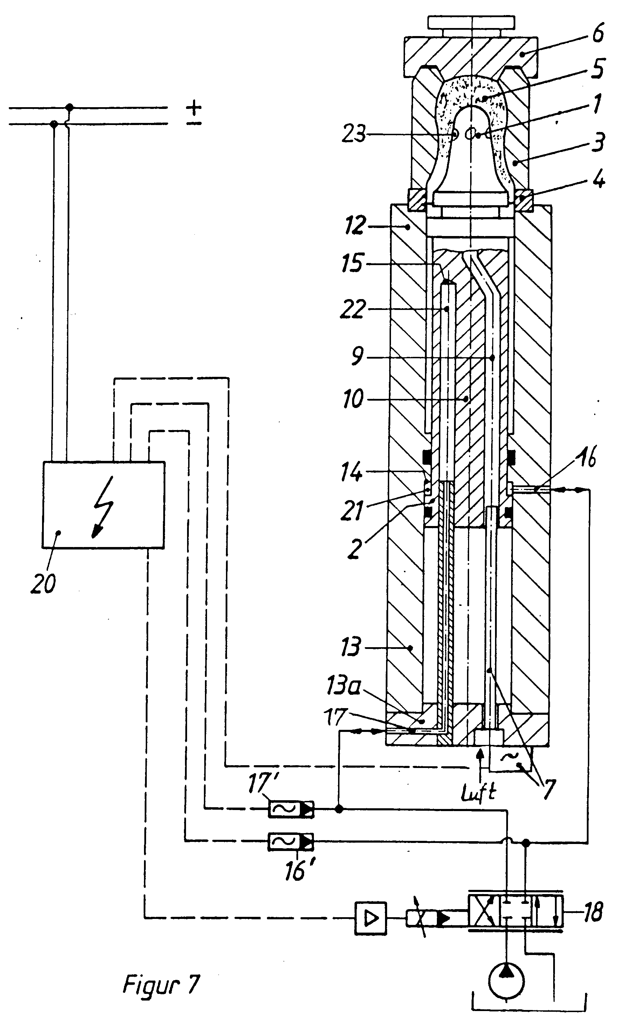

Gemäß Figuren 1, 6 und 7 ist ein innen hohler, Kühl- oder Preßluftdurchbrechungen aufweisender Pegel oder Plunger 1 am Ende 11 einer mit Luft durchströmbaren Kolbenstange 10 befestigt, z. B. aufgeschraubt. Die Kolbenstange 10 trägt einen in einem Zylindergehäuse 13 leichtgängig axial verschiebbare n Kolben 2 und ist fluiddicht durch eine Stirnwand 14 des Zylindergehäuses 13 geführt. Über Bohrungen 16 und 17 kann in die Kammern 21 und 22 des Zylindergehäuses 13 Hydraulikflüssigkeit zum Vor- und Zurückfahren des Kolbens 2 einströmen bzw. ausströmen.

Der Pegel 1 ist auf einem wesentlichen Teil seines etwa 190 mm langen Gesamthubes durch ein in Verlängerung des Zylindergehäuses 13 sich erstreckendes Gehäuse 12 mit einseitig offenem Stirnende für den Durchtritt des Pegels 1 geschützt.

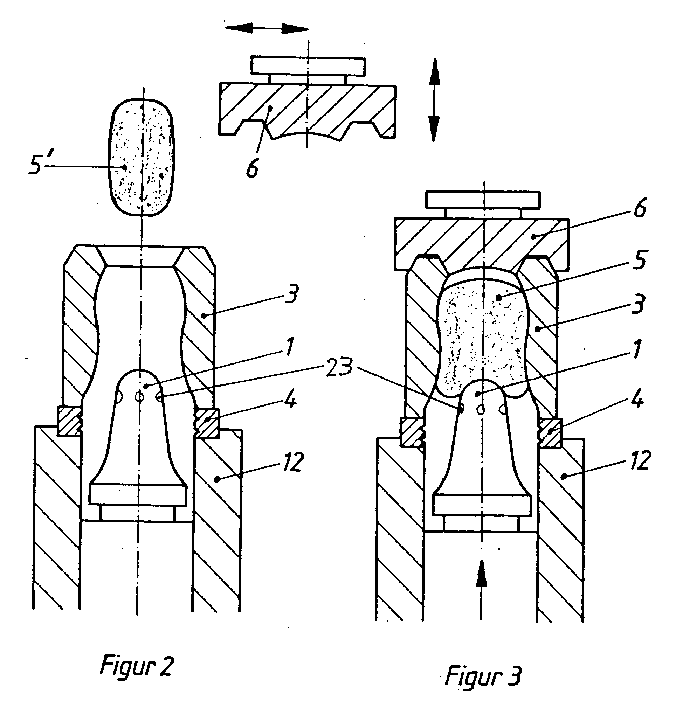

In der unteren Endposition (Pos. 1) des Pegels 1 bzw. des Kolbens 2 liegt der Kolben an einem unteren mechanischen Anschlag 13a des Zylindergehäuses 13 an. Beim Beginn eines Arbeitszyklusses gibte ein Mikroprozessor 20 (Figur 2) einem an sich bekannten elektro-hydraulischen Servoventil 18 ein externes Startsignal dadurch wird ein Verfahren des Pegels 1 in eine dem Mikroprozessor eingegebene Ladeposition (Pos. 2) mit steuer- oder regelbarer, insbesondere maximaler Geschwindigkeit eingeleitet. Diese Ladeposition kann stufenlos in beide Richtungen (Richtung a und b gemäß Fig. 1) eingestellt werden. In dem Weg-Zeit-Diagramm gemäß Figur 1 ist dieser Bewegungsablauf aus Maßstabsgründen als linear dargestellt. Tatsächlich führt der Beschleunigungs-und Bremsvorgang aber z. B. zu einem vorgebbaren, z. B. sinusförmigen oder exponentiellen Verlauf der Weg-Zeit-Kurve. Während dieses Bewegungsablaufes wird die Ist-Position des Pegels 1 mittels eines an sich bekannten, insbesondere innerhalb eines Luftzuführrohres für den Pegel angeordneten Positionssensors 7 laufend überwacht und dem Mikroprozessor 20 rückgemeldet. Aufgrund eines Soll-Ist-Wert-Vergleiches gibt der Mikroprozessor dem Servoventil 18 ein geeignetes Signal, durch das ein positions- und bevorzugt auch geschwindigkeitsgeregeltes Verfahren des Pegels 1 in die Ladeposition (Pos. 2) ermöglicht wird. Hierdurch wird ein exakt reproduzierbares Auffinden der Ladeposition gewährleistet. - Grundsätzlich kann der Arbeitszyklus auch bei jeder anderen Position, wie einer Zwischen- oder der Ladeposition, starten und enden.

In der Ladeposition (Pos. 2) verschließt der Pegel 1 die aus den Formseitenteilen 3, dem Mündungswerkzeug 4 und dem Vorformboden 6 bestehende Vorform nur zum Teil und bildet im Mündungsbereich der Vorform einen Ringspalt. Ein Glasposten, bestehend aus einem pro Arbeitszyklus in die Vorform fallend eingebrachten Glastropfen 5', wird durch weiteres Verfahren des Pegels 1 vorgeformt. Umittelbar vorher oder gleichzeitig wird die Vorform mittels des Vorformbodens 6 geschlossen.

Der Verformschritt wird wiederum durch ein entsprechendes externes Startsignal vom Mikroprozessor 20 an das Servo ventil 18 eingeleitet. Die Soll-Verfahrgeschwindigkeiten des Pegels beim Verformungsschritt werden dem Mikroprozessor 20 eingegeben, insbesondere können beliebig Weg-Zeit-Profile vorgegeben werden, z. B. sinusförmige oder exponentielle. Diese Regeleindringgeschwindigkeit kann auch linear sein; bevorzugt ändert sie sich gegen Ende des Verformungsschrittes hin zu kleineren Geschwindigkeiten und beträgt des Wert Null, wenn die sogenannte Endpreßstellung (Pos. 3), erreicht ist, d.h. der Glasposten (Külbel) 5 fertig vorgeformt ist. Das genaue Einhalten der vorgegebenen Geschwindigkeiten wird von einem kombinierten Positions- und Geschwindigkeitsregelkreis des Mikroprozessors 20 sichergestellt.

Gegen Ende des Verformungsschrittes wird die Positions-und Geschwindigkeitsregelung des Pegels 1, bevorzugt automatisch unter Zuhilfenahme von Druckmeßsensoren 16' und 17' in eine Druckregelung umgewandelt. Bevorzugt wird die Druckregelung der Positions- und Geschwindigkeitsregelung überlagert bis sie schließlich dominiert. Hierbei verfährt der Pegel solange weiter in den Glasposten (Külbel) 5 hinein, bis der durch das Verformen des Glaspostens sich einstellende Gegendruck am Pegel 1 einen dem Mikroprozessor 20 eingegebenen Druck erreicht hat. Auf diese Weise ist die Position des Pegels 1 während seines gesamten Bew egungsablaufes exakt regelbar und daher genaustens bekannt. Hierdurch wird es erstmals möglich, den Eigenschaftswerten des Glaspostes und der Änderung dieser Eigenschaftswerte während des Verformungsprozesses und/oder der Formen- und Werkzeugveränderungen, z. B. durch Abnutzung Rechnung zu tragen.

Wenn sich zwischen dem vorgegebenen Endpreßdruck des Pegels. und dem Gegendruck des Glaspostens ein Gleichgewicht einstellt, hat die optimale Verformung des Külbels stattgefunden und der Pegel 1 hat die Endpreßstellung (Pos. 3) erreicht. Somit wird ein weiteres Nachrücken des Pegels 1 vermieden und die Übertragung eines höheren statischen Druckes vom Pegel 1 auf das Glas und auf das Formensystem verhindert.

Nach Erreichen der Endpreßstellung 3 (Pos. 3) ist der Külbel fertiggestellt; sein Mündungsbereich ist in der Regel dann bereits endgültig, d. h. so wie für den Hohlglasartikel vorgesehen, fertiggestellt. Aus dieser Endpreßstellung wird der Pegel 1 zunächst geringfügig zurückgezogen, so daß zwischen dem Külbel und dem Pegel ein (Kühl)luftspalt 8 entsteht. In dieser Kühlposition (Pos. 4) ist der Pegel zwischen etwa 0,5 und 1,5 mm hinter der Endpreßstellung (Pos. 3) zurückgezogen und befindet sich mit einem Teil seines zylindrischen Bereiches 1' noch im Bereich des Mündungswerkzeuges 4, so daß der Mündungsbereich des Külbels während des schon wieder einsetzenden Wiedererwärmungsvorganges gestützt ist. Der konisch zulaufende Bereich 1" des Pegels 1 hat sich dann aber bereits von dem vorgepreßten Külbel 5 gelöst. Die Wiedererwärmung des weiter zu verformenden Külbelteils kann nun bereits beginnen; Beschädigungen der Glasinnenoberfläche, insbesondere durch den Pegel, werden auf ein Minimum reduziert.

Nach erfolgter Wiedererwärmung und Erreichen der Mündungsstabilität (Pos. 5) wird der Pegel durch ein entsprechendes Signal in die Startposition zurückgefahren.

Bei Leerlauf einer Fertigungsstation, d. h. wenn die Vorform nicht durch einen Glasposten geladen wird, fährt der Pegel bis in eine obere Endposition (Pos. 6) des Kolbens 2, in der er aufgrund der dem Mikroprozessor eingegebenen Wegposition stehen bleibt und aus der er durch ein entsprechendes externes Signal wieder in die Startposition zurückgefahren wird.

Die den Pegel 1 tragende Kolbenstange 10 ist mit einer axialen Durchgangsbohrung 9 versehen, durch die die Kühlluftzufuhr zu dem Pegel 1 erfolgt. Bevorzugt nimmt die Durchgangsbohrung 9 auch den als Absolutwegmeßgeber dienenden in einem Luftzuführrohr angeordneten Positionssensor 7 auf.

In den oder vor den beiden von dem Zylindergehäuse 13 mit den Stirnwänden 14 und 15 sowie dem Kolben 2 gebildeten Kammern 21 und 22 sind bevorzugt je ein oder mehrere hydro-elektrische analoge Druckgeber 16' und 17' untergebracht, so daß nicht nur der hydraulische Druck, sondern die tatsächliche Kraft des Pegels 1 ermittelt werden kann.

Die für das Betätigen des Kolbens 2 erwünschte Druckverstärkung oder verminderung wird durch das elektro-hydraulische Servoventil 18 erreicht, welches an der Außenwand des Zylindergehäuses 13 oder außerhalb, insbesondere in einer Steuerplatte, gemeinsam mit den Druckgebern 16′ und 17′ angeordnet und bevorzugt so ausgelegt ist, daß die maximale Druckverstärkung bzw. -verminderung erst bei einem Kolbenausschlag von mindesten 1,5% erfolgt.

Die frei wählbare Ladeposition (Pos. 2) sowie die ebenfalls frei wählbare Endpreßstellung (Pos. 3) können mit hoher Genauigkeit, z. B. mit +/- 0,1 mm oder besser, gehalten werden. Ebenso wird der einstellbare Enddrucksollwert des Pegels, der erfahrungsgemäß zwischen 200 und 600 Newton pro Quadratzentimeter liegt, mit hoher Genauigkeit von z. B. +/- 5 Newton pro Quadratzentimeter eingehalten. Alle Weg-Ist-Werte des Pegels werden von dem Positionssensor 7 (Wegmeßsystem) erfaßt und dem Mikroprozessor 20 zurückgemeldet. Über die am Ende des Verformungsschrittes erreichte Endposition und durch die Druckpar ameter des Pegels kann, wenn das Volumen der Vorform bekannt ist, ein Rückschluß das genaue Tropfengewicht des Glaspostens gezogen werden.

Es hat sich gezeigt, daß eine einwandfreie Verteilung des Glases in der Vorform, - auch bei dem relativ schwierigen Preß-Blas-Prozeß- und bei der Formung der Mündung des Hohlglasartikels durch eine kombinierte Positions-, Geschwindigkeits-und Druckregelung des Pegels im geschlossenen Regelkreis erreicht wird.

Wie ersichtlich führt also die neuartige Verwendung eines elektro-hydraulischen Servoantriebs beim Verformen eines Glaspostens zu unerwartet großen Vorteilen. Das gleiche gilt für die neuartige Verwendung einer elektronischen Datenverarbeitungslanlage, insbesondere eines Mikroprozessors, zum Regeln des Bewegungssablaufes eines hydraulischen Servoantriebs bei Zuhilfenahme eines Weg-, Strömungs- und/oder Druckmeßsensors.

**Bezugszeichenliste:**

| 1 | Pegel |
|---|---|
| 1′ | zylindrischer Bereich |
| 1″ | konischer Bereich |
| 2 | Kolben |
| 3 | Formseitenteile |
| 4 | Mündungswerkzeug |
| 5 | Külbel |
| 5′ | Glastropfen |
| 6 | Formboden |
| 7 | Positionssensor |
| 8 | (Kühl)luftspalt |
| 9 | Durchgangsbohrung |
| 10 | Kolbenstange |
| 11 | Ende |
| 12 | Gehäuse |
| 13 | Zylindergehäuse |
| 13a | unterer Anschlag |
| 14 | Stirnwand |
| 15 | Stirnwand |
| 16 | Bohrung |
| 16′ | Druckmeßsensor |
| 17 | Bohrung |
| 17′ | Druckmeßsensor |
| 18 | Servoventil |
| 20 | Mikroprozessor |
| 21 | Kammer |
| 22 | Kammer |
| 23 | Kühlluft-/Preßluftdurchbrechungen |
| Pos. 1 | untere Endposition |
| Pos. 2 | Ladeposition |
| Pos. 3 | Endpreßstellung |
| Pos. 4 | Kühlposition |
| Pos. 5 | Ende der Wiedererwärmung |
| Pos. 6 | obere Endposition |

**Patentansprüche**

1. Verfahren zum Verformen eines Glaspostens zu einem Hohlglasartikel mittels eines in den Glasposten elektronisch geregelt, hydraulisch vortreibbaren Pegels, bei dem der Pegel zumindest von einer Ladeposition des Glaspostens in die Endpreßstellung verfahren wird, und
der Pegel während des, zumindest annähernd, gesamten Bewegungsablaufes mittels eines geschlossenen Positionsregelkreises positionsgeregelt verfahren wird, wobei
der Pegel bis in die Endpreßstellung oder bis in eine vorgebbare Position vor der Endpreßstellung mit vorgebbarer Geschwindigkeit abhängig von der Position geregelt verfahren wird, wodurch zwischen vorgebbaren Positionen des Pegels vorgebbare Geschwindigkeiten regelbar eingehalten werden und somit auch der Geschwindigkeitsregelkreis ein geschlossener Regelkreis ist.

2. Verfahren nach Anspruch 1, dadurch gekennzeichnet, daß die Verformung in mindestens zwei unmittelbar ineinander übergehenden Verformungsschritten erfolgt, wobei der Pegel während des letzten Verformungsschrittes druckgeregelt in den Glasposten solange einfährt, bis der in dem Glasposten sich einstellende Gegendruck einen vorgegebenen Druck erreicht hat.

3. Verfahren nach Anspruch 1 oder 2, dadurch gekennzeichnet, daß sich die Verformungsschritte ganz oder teilweise überlagern.

4. Verfahren nach Anspruch 3, dadurch gekennzeichnet, daß die Überlagerung allmählich, und zwar derart vollzogen wird, daß zunächst die Geschwindigkeitsregelung und schließlich die Druckregelung dominiert.

5. Verfahren nach einem der Ansprüche 2 bis 4, dadurch gekennzeichnet, daß der Positionsregelkreis die mit Erreichen des vorgegebenen Druckes erzielte Position hält.

6. Verfahren nach einem der Ansprüche 1 bis 5, dadurch gekennzeichnet, daß die Positionen des Pegels, bei denen sich seine Bewegungszustände oder die Regelungsarten oder beide ändern sollen, frei vorgebbar sind.

7. Verfahren nach einem der Ansprüche 1 bis 6, dadurch gekennzeichnet, daß der Pegel mit regelbarer Geschwindigkeit von seiner unteren Endposition (Pos. 1) in die Ladeposition verfahren wird.

8. Verfahren nach einem der Ansprüche 1 bis 7, dadurch gekennzeichnet, daß der Pegel nach Erreichen der Endpreßstellung aus dieser zunächst geringfügig in eine Abkühlposition (Pos. 4) zurückgezogen wird, so daß zwischen dem zum Külbel verformten Glasposten und dem Pegel ein Kühlluftspalt entsteht.

9. Verfahren nach Anspruch 8, dadurch gekennzeichnet, daß die Wiedererwärmung des Külbels beginnt, wenn sich der Pegel in der Abkühlposition befindet.

10. Verfahren nach Anspruch 8 oder 9, dadurch gekennzeichnet, daß in der Abkühlposition ein konischer Bereich des Pegels vom Külbel getrennt ist und der Mündungsbereich des Külbels von einem zylindrischen Bereich des Pegels gestützt wird.

11. Verfahren nach einem der Ansprüche 1 bis 10, dadurch gekennzeichnet, daß das Tropfengewicht des Glaspostens auf der Basis der vom Pegel im Verformungsschritt erreichten Endstellung bestimmt wird.

12. Vorrichtung zum Durchführen des Verfahrens nach einem der Ansprüche 1 bis 11, mit einem in den Glasposten elektronisch geregelt, hydraulisch vortreibbaren Pegel, bei der der Pegel zumindest von einer Ladeposition des Glaspostens in die Endpreßstellung verfahrbar ist, und ein geschlossener Positionsregelkreis vorgesehen ist, mittels dessen der Pegel (1) während des, zumindest annähernd, gesamten Bewegungsablaufes positionsgeregelt verfahrbar ist, wobei eine Einrichtung zur Überlagerung von geschwindigkeitsgeregeltem und positionsgeregeltem Vortreiben des Pegels vorgesehen ist, die es ermöglicht, den Pegel bis in die Endpreßstellung oder bis in eine vorgebbare Position vor der Endpreßstellung mit vorgebbarer Geschwindigkeit abhängig von der Position geregelt zu verfahren und somit zwischen vorgebbaren Positionen des Pegels vorgebbare Geschwindigkeiten regelbar einzuhalten, so daß auch der Geschwindigkeitsregelkreis ein geschlossener Regelkreis ist.

13. Vorrichtung nach Anspruch 12, gekennzeichnet durch eine Einrichtung zum druckgeregelten Verfahren des Pegels während des letzten Verformungsschrittes.

14. Vorrichtung nach Anspruch 13, dadurch gekennzeichnet, daß je ein oder mehrere Druckgeber innerhalb oder außerhalb der beidseitig eines den Pegel (1) über eine Kolbenstange (10) betätigenden Kolbens (2) gebildeten Kammern (Zylinderkammern) (21, 22) zur fortlaufenden Istkraftbestimmung des Pegels angeordnet ist bzw. sind.

15. Vorrichtung nach Anspruch 13 oder 14, gekennzeichnet durch eine Einrichtung zur allmählichen Überführung des geschwindigkeitsgeregelten in den druckgeregelten Verformungsschritt.

**Claims**

1. A method for moulding a glass plug into a hollow glass article by means of a rod, which can be electronically controlled to advance hydraulically into the glass plug, the rod being displaced at least from a loading position of the glass plug into the final squeezing position, and during the, at least approximately, entire movement sequence the position-controlled displacement of the rod being effected by a closed position control circuit, the rod being displaced into the final squeezing position or into a predeterminable position before the final squeezing position at a predeterminable velocity as a function of the position, so that predeterminable velocities between predeterminable positions of the rod can be observed and so that the velocity control circuit is also a closed control circuit.

2. A method according to claim 1, characterised in that the moulding is effected in at least two moulding steps in direct succession, the rod advancing into the glass plug during the last moulding step with controlled pressure until the counter pressure generated in the glass plug has reached a given value.

3. A method according to claim 1 or 2, characterised in that the moulding steps are completely or partially superimposed.

4. A method according to claim 3, characterised in that the superimposition is effected gradually and in such a manner that the velocity control firstly predominates and finally the pressure control predominates.

5. A method according to one of claims 2 to 4, characterised in that the position control circuit maintains the position obtained as the given pressure is reached.

6. A method according to one of claims 1 to 5, characterised in that the positions of the rod, in which its movement states or the types of control or both are to change, are freely predeterminable.

7. A method according to one of claims 1 to 6, characterised in that the rod is displaced at a controllable velocity from its lower end position (pos. 1) into the loading position.

8. A method according to one of claims 1 to 7, characterised in that, after reaching the final squeezing position, the rod is firstly slightly withdrawn into a cooling position (pos. 4), so that a cooling air gap forms between the glass plug moulded to form the parison and the rod.

9. A method according to claim 8, characterised in that the reheating of the parison begins when the rod is in the cooling position.

10. A method according to claim 8 or 9, characterised in that in the cooling position a conical section of the rod is separated from the parison and the opening section of the parison is supported by a cylindrical section of the rod.

11. A method according to one of claims 1 to 10, characterised in that the drop weight of the glass plug is determined on the basis of the end position reached by the rod during the moulding step.

12. A device for carrying out the method according to one of claims 1 to 11, comprising a rod, which can be electronically controlled to advance hydraulically into the glass plug, the rod being displaceable at least from a loading position of the glass plug into the final squeezing position, and a closed position control circuit is provided, by means of which the position-controlled displacement of the rod (1) can be effected during the, at least approximately, entire movement sequence, a device for superimposing velocity-controlled and position-controlled advances of the rod being provided, which allows the rod to be advanced into the final squeezing position or into a predeterminable position before the final squeezing position at a predeterminable velocity as a function of the position, so that predeterminable velocities between predeterminable positions of the rod can be observed and so that the velocity control circuit is also a closed control circuit.

13. A device according to claim 12, characterised by a device for the pressure-controlled displacement of the rod during the last moulding step.

14. A device according to claim 13, characterised in that one or more pressure transmitters is/are arranged in each case inside or outside the chambers (cylinder chambers) (21, 22) formed on either side of a piston (2) actuating the rod (1) via a piston rod (10) so as to continuously determine the actual force of the rod.

15. A device according to claim 13 or 14, characterised by a device for gradually transferring the velocity-controlled moulding step into the pressure-controlled moulding step.

**Revendications**

1. Procédé pour la déformation d'une paraison en verre en un article en verre creux au moyen d'un mandrin pouvant être avancé par une action hydraulique sous réglage électronique, dans lequel le mandrin avance au moins d'une position de chargement de la paraison en verre à une position de pressage finale, caractérisé en ce que le mandrin est avancé avec un réglage de la position pendant, au moins approximativement, tout le mouvement au moyen d'un circuit de réglage de position Fermé, le mandrin étant avancé de manière réglée jusqu'à la position finale de pressage ou jusqu'à une position pouvant être prédéterminée avant la position finale de pressage à une vitesse pouvant être prédéterminée en fonction de la position, ce qui permet de maintenir les vitesses pouvant être prédéterminées entre des positions pouvant être prédéterminées du mandrin avec possibilité de réglage et ainsi de faire également du circuit de réglage de la vitesse un circuit de réglage fermé.

2. Procédé selon la revendication 1, caractérisé en ce que le formage se fait en au moins deux étapes de formage se succédant immédiatement l'une à l'autre, le mandrin pénétrant dans le poste de verre sous une pression régulée pendant la dernière étape de formage jusqu'à ce que la contre-pression s'établissant dans le poste de verre atteigne une pression prédéterminée.

3. Procédé selon la revendication 1 ou 2, caractérisé en ce que les étapes de formage se superposent totalement ou partiellement.

4. Procédé selon la revendication 3, caratérisé en ce que la superposition est réalisée progressivement, de telle sorte que le réglage de la vitesse prédomine d'abord, puis le réglage de la pression.

5. Procédé selon l'une des revendications 2 à 4, caractérisé en ce que le circuit de réglage de la position maintient la position atteinte lorsque la pression prédéterminée est atteinte.

6. Procédé selon l'une des revendications 1 à 5, caractérisé en ce que le positionnement du mandrin dans lequel ses états d'avancement ou ses types de réglage ou les deux doivent se modifier peut être prédéterminé à volonté.

7. Procédé selon l'une des revendications 1 à 6, caractérisé en ce que le mandrin est avancé à une vitesse réglable de sa position de repos basse (Pos. 1) à la position de chargement.

8. Procédé selon l'une des revendications 1 à 7, caractérisé en ce qu'après avoir atteint la position finale de pressage le mandrin est d'abord légèrement reculé jusqu'à une position de refroidissement (Pos. 4), de telle sorte qu'il se crée entre le poste formé en paraison et le mandrin un espace de circulation pour l'air de refroidissement.

9. Procédé selon la revendication 8, caractérisé en ce que le réchauffement de la paraison commence lorsque le mandrin se trouve dans la position de refroidissement.

10. Procédé selon la revendication 8 ou 9, caractérisé en ce que dans la position de refroidissement, un secteur conique du mandrin est séparé de la paraison et en ce que le secteur d'embouchure de la paraison est supporté par un secteur cylindrique du mandrin.

11. Procédé selon l'une des revendications 1 à 10, caractérisé en ce que le poids de larme de la paraison de verre est déterminé sur la base de la position finale atteinte par le mandrin pendant l'étape de formage.

12. Dispositif pour la mise en oeuvre du procédé selon l'une des revendications 1 à 11, comportant un mandrin pouvant être avancé par une action hydraulique sous réglage électronique dans la paraison de verre, dans laquelle le mandrin peut être avancé au moins d'une position de chargement de la paraison de verre à la position finale de pressage, caractérisé en ce qu'un circuit de réglage de la position fermée est prévu, au moyen duquel le mandrin (1) peut être avancé pendant, au moins approximativement, tout le mouvement avec un réglage de la position, un dispositif de superposition de l'avancement avec un réglage de la vitesse et un réglage de la position du mandrin étant prévu, qui permet d'avancer le mandrin de manière régulée jusqu'à la position finale de pressage ou jusqu'à une position pouvant être prédéterminée avant la position finale de pressage à une vitesse pouvant être prédéterminée en fonction de la position et ainsi de maintenir avec possibilité de réglage les vitesses pouvant être prédéterminées, entre des positions du mandrin pouvant être prédéterminées, de telle sorte que le circuit de réglage de la vitesse soit aussi un circuit de réglage fermé.

13. Dispositif selon la revendication 12, caractérisé en ce qu'il comporte un mécanisme d'avancement du mandrin avec réglage de la pression pendant la dernière étape du formage.

14. Dispositif selon la revendication 13, caractérisé en ce qu'un ou plusieurs capteurs de pression sont prévus à l'intérieur ou à l'extérieur des chambres (chambres de cylindre) (21, 22) formées des deux côtés d'un piston (2) actionnant le mandrin (1) par l' intermédiaire d'une tige de piston (10) pour la détermination continue de la force réelle du mandrin.

15. Dispositif selon la revendication 13 ou 14, caractérisé en ce qu'il comporte un mécanisme pour le passage progressif de l'étape de formage avec réglage de la vitesse à l'étape avec réglage de la pression.

Figur 1

Figur 6

Figur 2

Figur 3

Figur 4

Figur 5

Figur 7